# EUROPEAN PATENT APPLICATION

(11) **EP 2 536 098 A1**
(43) Date of publication of application: **19.12.2012**
(21) Application number: 11360024.1
(22) Date of filing: 16.06.2011
(51) Int. Cl.: H04L 29/06

(54) **Method and apparatuses for controlling encoding of a dataflow**

(71) Applicant: Alcatel Lucent, 75007 Paris (FR)
(72) Inventor: Wang, Yalou, Swindon Wiltshire SN5 5UG (GB)
(74) Representative: Script IP Limited

(57) **Abstract**

A method of controlling encoding of a data flow to be transmitted in accordance with at least one of a plurality of encoding schemes over a channel of a bearer established between a first network node and a second network node of a wireless communications system. A memory is provided having a plurality of entries, each entry being operable to store encoding context information relating to an encoding scheme being applied to a data flow being transmitted by the first network node. A reserved area of the memory is provided having a plurality of reserved entries operable to store encoding context information relating to a subset of the plurality of encoding schemes. On receipt of a request to support transmission of a new data flow, it is determined whether entries currently unused for storing encoding context information are only available in the reserved area and, if so, a preservation state is entered where the new data flow is encoded with at least one of the subset of the plurality of encoding schemes.

## Description

### FIELD OF THE INVENTION

The present invention relates to a method of controlling encoding of a dataflow, a computer program product and a network node.

### BACKGROUND

It is known to generate encoded data packets for transmission from one network node of a communication system to another network node over a communication link. For example, it is known to receive data packets forming a dataflow at a base station or user equipment which, when encoded, reduces the size of the data packets to be transmitted and therefore improves the performance of the communications link.

Robust header compression (ROHC) is one such packet header compression protocol which is used to encode data packets in wireless networks, such as third generation Wideband Code Division Multiple Access (3G WCDMA) and fourth generation Long Term Evolution (4G LTE) networks. It reduces the packet header size and hence reduces the air interface bandwidth required to support transmission of those packets.

ROHC is a bidirectional protocol with a compressor and decompressor provided at each end of a radio data bearer. There are multiple dataflows within each bearer and each dataflow can be mapped to one application dataflow (such as one web-browsing window).

Although this approach enables encoded data packets to be transmitted between network nodes, under some circumstances undesirable consequences occur.

Accordingly, it is desired to provide an improved technique for controlling encoding of a dataflow.

### SUMMARY

According to a first aspect, there is provided a method of controlling encoding of a data flow to be transmitted in accordance with at least one of a plurality of encoding schemes over a channel of a bearer established between a first network node and a second network node of a wireless communications system, the method comprising the steps of: providing a memory having a plurality of entries, each entry being operable to store encoding context information relating to an encoding scheme being applied to a data flow being transmitted by the first network node; providing a reserved area of the memory having a plurality of reserved entries operable to store encoding context information relating to a subset of the plurality of encoding schemes; and on receipt of a request to support transmission of a new data flow, determining whether entries currently unused for storing encoding context information are only available in the reserved area and, if so, entering a preservation state where the new data flow is encoded with at least one of the subset of the plurality of encoding schemes.

The first aspect recognises that the memory resources within network nodes are typically finite. Accordingly, the amount of memory available to support processing tasks of the network nodes is also limited. When encoding a dataflow to be transmitted between network nodes, it may be necessary to store encoding context information relating to the encoding scheme being applied to the dataflow. This encoding context information typically needs to be stored in a memory. As the number of dataflows increases, the amount of memory required to store the associated encoding context information for each of those dataflows also increases. Accordingly, a situation can occur where no further dataflows can be established even if sufficient communications link bandwidth still exists to support the new dataflow when the amount of memory available to store the encoding context information is exceeded. However, typically it is not practical to allocate unlimited memory for the storage of encoding context information, since this may lead to unpredictable operation of the network node.

Accordingly, a method of encoding a dataflow to be transmitted in accordance with at least one of a plurality of encoding schemes is provided. The dataflow may be transmitted over a channel. The channel may be of a bearer established between network nodes of a communication system. A memory may be provided which has a plurality of entries. Each of those entries may be operable to store encoding context information. The encoding context information may relate to an encoding scheme to be applied to a dataflow to be transmitted. A reserved area of the memory may be provided. That reserved area may have a number of reserved entries which may be used to store encoding context information. The reserve entries may be used to store encoding context information only for a subset of the encoding schemes. When a request to support a new dataflow is received, a determination may then be made of whether the only entries in the memory which are not being used to store encoding context information are within the reserved area. If the only entries in the memory which are not being used to store encoding context information are within the reserved area, then a preservation state may be entered. When in the preservation state, the new dataflow may only be encoded with one or more of the subset of encoding schemes. Providing an area of reserved memory which may only store encoding context information for a subset of the encoding schemes, and by only enabling those subset of encoding schemes to be used when the only unoccupied space of the memory is within the reserved space, ensures that dataflows using the subset of encoding schemes can always be supported by each bearer. In other words, this approach ensures that a minimal number of dataflows encoded with predetermined encoding schemes can always be supported by each bearer. This improves the predictability of transmissions between network nodes, since it can always be guaranteed that each radio bearer will be able to support dataflows encoded in a particular way, irrespective of the number of dataflows being established by other bearers, even with a finite amount of memory being allocated to store encoding context information.

In one embodiment, the step of determining comprises determining whether a number of total entries in the memory which are currently unused for storing encoding context information is less than or equal to a number of reserved entries in the reserved area which are currently unused for storing encoding context information and, if so, entering the preservation state where the new data flow is encoded with the at least one of the subset of the plurality of encoding schemes. Accordingly, a determination may be made of the total number of entries in the memory which are unoccupied. Also, a determination may be made of the number of entries in the reserved area which are unoccupied. If the total number of unoccupied entries is greater than the number of unoccupied entries in the reserved area, then this indicates that space exists in the unreserved area which may be used to store encoding context information for a new dataflow. However, if the total number of entries within the memory which are unoccupied is less than or equal to the number of entries in the reserved area which are unoccupied, then this indicates that only entries in the reserved area remain and that the preservation state should be activated.

In one embodiment, when in the preservation state and the bearer is transmitting an existing data flow encoded with the at least one of the subset of the plurality of encoding schemes, the method comprises the step of incorporating the new data flow with the existing data flow being encoded with the at least one of the subset of the plurality of encoding schemes. Accordingly, if it is determined that the bearer is transmitting an existing dataflow using that particular subset of encoding schemes, then the new dataflow may be incorporated with the existing dataflow being encoded with that encoding scheme. It will be appreciated that this enables a new dataflow to be transmitted without needing to use another entry in the memory to store the encoding context information.

In one embodiment, when in the preservation state the method comprises the step of determining whether the new data flow is associated with voice data and, if not, encoding the new data flow with an uncompressed encoding scheme from the subset of the plurality of encoding schemes. Accordingly, when in the preservation state, if the dataflow is not voice related data, then the new dataflow may be encoded using an uncompressed encoding scheme. It will be appreciated that it is possible to transmit any dataflow with an uncompressed encoding scheme and that other dataflows may also be incorporated with that dataflow to help guarantee that any new dataflow may be transmitted. However, it will also be appreciated that transmitting dataflows using an uncompressed encoding scheme may reduce the performance of the bearer.

In one embodiment, the method comprises the step of determining whether the new data flow is associated with voice data and, if so, encoding the new data flow with at least one header compression encoding scheme from the subset of the plurality of encoding schemes. Accordingly, a determination may be made of whether the new dataflow is a voice dataflow. The subset encoding schemes may include at least one header compression encoding scheme. If a new voice dataflow is detected then the new dataflow may be encoded with a header compression encoding scheme. Hence, whenever a voice dataflow is detected this will be encoded with an encoding scheme which is particularly efficient for voice dataflows, such as a header compression encoding scheme. Also, because the compression encoding scheme is one of the subset of encoding schemes, the encoding context information for that voice dataflow will always be stored in the reserved area, thereby guaranteeing that each bearer will always be able to support voice dataflows.

In one embodiment, when the bearer is not transmitting an existing data flow encoded with the at least one of the subset of the plurality of encoding schemes, the method comprises the step of storing encoding context information relating to each of the at least one encoding scheme being applied to the new data flow being transmitted by the first network node in a respective currently unused entry of the reserved area. Accordingly, when a dataflow is to be encoded with one of the sets of encoding scheme and no dataflow with that encoding scheme is currently being transmitted by the bearer, an entry in the reserved area may then be used to store the encoding context information for that dataflow.

In one embodiment, the plurality of encoding schemes comprises robust header compression encoding schemes.

In one embodiment, the method comprises the step of exiting the preservation when the total number of entries of the memory currently unused for storing encoding context information exceeds the number of reserved entries in the reserved area which are currently unused for storing encoding context information by a first predetermined amount. Accordingly, hysteresis is introduced for the transition between the preserved and a non-preserved (or normal) state of operation in order to prevent rapid fluctuation in state between two values.

In one embodiment, the method comprises the step of setting the plurality of reserved entries in proportion to a number of bearers establishable between the first network node and the second network node. Accordingly, the size of the reserved area may be determined based on the number of bearers which may be established between network nodes.

In one embodiment, the plurality of reserved entries comprise at least one reserved entry for each bearer establishable between the first network node and the second network node. Typically, one entry may be reserved for each bearer.

In one embodiment, the method comprises the step of setting at least three reserved entries for each bearer establishable between the first network node and the second network node. By ensuring that at least three entries exist in the reserved area for each bearer, it is possible to ensure that at least three dataflows may be established within each bearer. Typically, these three dataflows may be at least two VoIP-related dataflows (one for the voice data and one for control information), as well as an uncompressed dataflow. This ensures that a bearer can always efficiently transmit VoIP dataflows and can always transmit any other dataflow as an uncompressed dataflow.

In one embodiment, the method comprises the step of determining whether the number of total entries in the memory which are currently unused for storing encoding context information is less than or equal to a predetermined threshold but is greater than the number of reserved entries in the reserved area which are currently unused for storing encoding context information and, if so, entering a reduced preservation state where the new data flow is encoded with at least one of an expanded subset of the plurality of encoding schemes. Accordingly, an intermediate state (or reduced preservation state) may be entered when the occupancy of the memory rises but there are still some unoccupied entries within the unreserved area. This approach provides a multi-stage preservation scheme where increasingly fewer subsets of encoding schemes may be used. For example, a greater number of encoding scheme than the example three given above may be used when in the reduced preservation state, with only the example three encoding schemes mentioned above being available in the preservation state. Alternatively, the reduced preservation state may enable the example three encoding schemes mentioned above to be used, with the preservation state only enabling, for example, the uncompressed encoding scheme to be used. It will be appreciated that the selection of the number and type encoding schemes in each of the states may be made based on the expected dataflows to be transmitted by the network node and may vary from that mentioned above. By changing the number of encoding schemes available in the preservation state, the size of the reserved area can be altered. Also, it will be appreciated that multiple reduced preservation schemes may be provided, each having their own threshold to provide for a graduated reduction in the number of available encoding schemes.

In one embodiment, the method comprises the step of exiting the reduced preservation state when the number of total entries in the memory which are currently unused for storing encoding context information exceeds the predetermined threshold by a second predetermined amount. Accordingly, hysteresis may also be introduced when entering and existing the reduced preservation state.

In one embodiment, the method comprises the step of signalling between the second network node and the first network node when performing at least one of entering and exiting at least one of the preservation state and the reduced preservation state. It will be appreciated that both network nodes will need to maintain memory space for storing encoding context information. One network node may not be aware of the memory constraints on the other network node and so signalling may be sent between the network nodes when they transition between states to provide an indication of the memory state of the other network node. The network node receiving the signalling may then take appropriate action as if it were also in that state. For example, if a network node which receives a dataflow indicates that it has entered the preservation state or reduced preservation state, whereas the network node transmitting the dataflow is not, then the network node transmitting the dataflow may thereafter assume it is in the preservation state or reduced preservation state and act accordingly until a signal is received from the network node receiving the dataflow to indicate that it has now exited that state.

According to a second aspect, there is provided a computer program product operable, when executed on a computer, to perform the method steps of the first aspect.

According to a third aspect, there is provided a network node operable to control encoding of a data flow to be transmitted in accordance with at least one of a plurality of encoding schemes over a channel of a bearer established with another network node of a wireless communications system, the network node comprising: a memory having a plurality of entries, each entry being operable to store encoding context information relating to an encoding scheme being applied to a data flow being transmitted by the first network node, the memory having a reserved area having a plurality of reserved entries operable to store encoding context information relating to a subset of the plurality of encoding schemes; and determining logic operable, on receipt of a request to support transmission of a new data flow, to determine whether entries currently unused for storing encoding context information are only available in the reserved area and, if so, to enter a preservation state where the new data flow is encoded with at least one of the subset of the plurality of encoding schemes.

In one embodiment, the determining logic is operable to determine whether a number of total entries in the memory which are currently unused for storing encoding context information is less than or equal to a number of reserved entries in the reserved area which are currently unused for storing encoding context information and, if so, to enter the preservation state where the new data flow is encoded with the at least one of the subset of the plurality of encoding schemes.

In one embodiment, the determining logic is operable, when in the preservation state and the bearer is transmitting an existing data flow encoded with the at least one of the subset of the plurality of encoding schemes, to incorporate the new data flow with the existing data flow being encoded with the at least one of the subset of the plurality of encoding schemes.

In one embodiment, the determining logic is operable, when in the preservation state, to determine whether the new data flow is associated with voice data and, if not, to encode the new data flow with an uncompressed encoding scheme from the subset of the plurality of encoding schemes.

In one embodiment, the determining logic is operable to determine whether the new data flow is associated with voice data and, if so, to encode the new data flow with at least one header compression encoding scheme from the subset of the plurality of encoding schemes.

In one embodiment, the determining logic is operable, when the bearer is not transmitting an existing data flow encoded with the at least one of the subset of the plurality of encoding schemes, to store encoding context information relating to each of the at least one encoding scheme being applied to the new data flow being transmitted by the first network node in a respective currently unused entry of the reserved area.

In one embodiment, the plurality of encoding schemes comprises robust header compression encoding schemes.

In one embodiment, the determining logic is operable to exit the preservation when the total number of entries of the memory currently unused for storing encoding context information exceeds the number of reserved entries in the reserved area which are currently unused for storing encoding context information by a first predetermined amount.

In one embodiment, the plurality of reserved entries comprise a number of entries which is proportional to a number of bearers establishable between the first network node and the second network node.

In one embodiment, the plurality of reserved entries comprise at least one reserved entry for each bearer establishable between the first network node and the second network node. Typically, one entry may be reserved for each bearer.

In one embodiment, the plurality of reserved entries comprise at least three reserved entries for each bearer establishable between the first network node and the second network node. Typically, three entries may be reserved for each VoIP bearer.

In one embodiment, the determining logic is operable determine whether the number of total entries in the memory which are currently unused for storing encoding context information is less than or equal to a predetermined threshold but is greater than the number of reserved entries in the reserved area which are currently unused for storing encoding context information and, if so, to enter a reduced preservation state where the new data flow is encoded with at least one of an expanded subset of the plurality of encoding schemes.

In one embodiment, the determining logic is operable to exit the reduced preservation state when the number of total entries in the memory which are currently unused for storing encoding context information exceeds the predetermined threshold by a second predetermined amount.

In one embodiment, the determining logic is operable to signal between the second network node and the first network node when performing at least one of entering and exiting at least one of the preservation state and the reduced preservation state.

According to a fourth aspect, there is provided a method of controlling encoding of a data flow to be transmitted in accordance with at least one of a plurality of encoding schemes over a channel of a bearer established between a first network node and a second network node of a wireless communications system, the method comprising the steps of: providing a memory having a plurality of entries, each entry being operable to store encoding context information relating to an encoding scheme being applied to a data flow being transmitted by the first network node; providing a reserved area of said memory having a plurality of reserved entries operable to store encoding context information relating to a core subset of said plurality of encoding schemes; and on receipt of a request to support transmission of a new data flow, determining whether it requires an extra encoding context not belonging to the said core subset of encoding contexts, and if so, determining whether there is empty space in the non-reserved area of the said memory which can accommodate this extra encoding contexts, and if not, entering a preservation state where said new data flow is encoded only with at least one of said core subset of said plurality of encoding schemes, but not the extra encoding context.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows an example ROHC architecture;
Figure 2 shows an example ROHC context;
Figure 3 illustrates schematically the arrangement of a memory storing ROHC context;
Figure 4 illustrates an example encoding control scheme according to one embodiment; and
Figure 5 illustrates an example encoding control scheme according to another embodiment.

### Overview

Before discussing embodiments in detail, an overview will first be provided. When encoding techniques are utilised typically to minimise bandwidth of transmissions occurring between network nodes of a telecommunications system (such as a wireless telecommunications system or other telecommunications system), a memory typically needs to be provided which stores encoding context information which identifies an encoding scheme which has been applied to data or a dataflow to be transmitted between those network nodes. The memory may have a number of entries, each of which stores encoding context information for particular data or dataflow. Each item of encoding context information may be many hundredths of bytes or more. Also, it may be possible for large numbers of dataflows between network nodes to be encoded.

To allocate sufficient memory to enable every possible conceivable number of dataflows between network nodes to be supported and to enable their associated items of encoding context information to be stored in the memory would require a large amount of memory to be allocated in each network node. In most situations, the amount of memory available will be limited and this may place a constraint on the number of separate items of encoding context information that may be stored and may limit the number of dataflows which may be established between network nodes. In other words, a situation can arise where the amount of available memory space has been used up and so new dataflows cannot be supported because there is no space to store the encoding context information associated with that data flow. In such a case, the packets associated with those dataflows will likely be dropped.

To help ameliorate this problem, a technique is provided where a portion of the memory used to store encoding context information is reserved. This reserved portion of memory is only used to store encoding context information relating to some of all of the possible encoding schemes. In particular, the reserved portion is typically used for storing encoding context information relating to an encoding scheme which uses no compression on the dataflow, or those encoding schemes which are used by dataflows associated with Voice over IP (VoIP). Reserving space for VoIP dataflows is particularly advantageous since VoIP dataflows benefit enormously from encoding schemes such as header compression.

By having a reserved portion which only stores encoding context information for those encoding schemes, it is possible to reduce the likelihood of a new dataflow being dropped. This is because if an existing pair of VoIP dataflows have been established on that bearer (one for data and one for control), then the new VoIP data packets may simply be incorporated into the existing pair of VoIP dataflows. Alternatively, if a new pair of VoIP dataflows is to be established and no existing VoIP dataflows are being transmitted by a bearer, then there will always be space in the reserved portion to store the encoding context information for the new pair of VoIP dataflows. Likewise, if a new dataflow (either VoIP or non-VoIP related) is to be established which cannot be incorporated into an existing dataflow and no space exists to store its encoding context information, then space will also always exist in the reserved portion to store its encoding context information and to transmit that dataflow with no compression. Hence, by having a reserved portion, it will always be possible to establish a VoIP dataflow and an uncompressed dataflow on each bearer. In other words, this ensures that for each possible bearer supportable between network nodes there will always be enough reserved space in the memory to support uncompressed dataflows and VoIP dataflows. Any new dataflow can then be supported since every new dataflow can either be transmitted as a VoIP dataflow or as an uncompressed dataflow.

Although it will be appreciated that this approach is applicable to any encoding scheme which utilises memory to store encoding context information (which typically provides information to the encoder or compressor at one end of a communication link and information to a decoder or decompressor at the other end of the communication link), embodiments will be described with reference to ROHC, as will now be described in more described in more detail below.

### Robust Header Compression (ROHC)

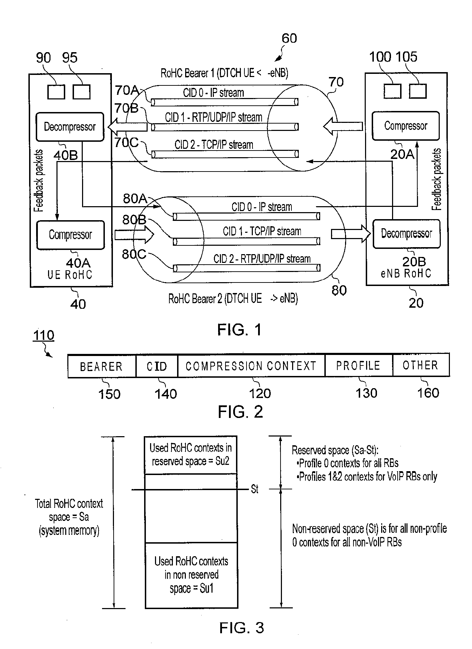

Figure 1 shows an example ROHC architecture and Figure 2 shows an example ROHC context 110 which is associated with each dataflow and stored as an entry in a memory. Each dataflow has one ROHC context associated therewith for use by its compressor and one ROHC context associated therewith for use by its decompressor. As mentioned above, ROHC is a packet header compression protocol widely used in wireless networks such as 3G WCDMA and 4G LTE networks. The protocol reduces the header size of the transmitted packets of a dataflow and, hence, reduces the bandwidth required for the transmission of the packets over the air interface.

As shown in Figure 1, there are provided two network nodes (in this case, user equipment 40 and a base station 20) having an air interface 60 therebetween. On each end of the air interface 60 is provided a compressor and a decompressor pair 40a, 20b and 20a, 40b (referred to as a ROHC entity) for each radio bearer 70, 80. There are multiple ROHC flows 70a-70c and 80a-80c on each bearer 70, 80 where each flow can be mapped to one application dataflow (such as one web-browsing window). Accordingly, any one bearer 70, 80 may have many such dataflows. Each dataflow within a bearer is given a channel ID (CID).

As mentioned above, each ROHC context 110 is associated with one dataflow and the ROHC context 110 comprises a number of fields. A bearer field 150 identifies the bearer, whilst the CID field 140 identifies the CID of the channel within that bearer. Another field is the compression context 110 which is used to store, for example, the original header, cyclic redundancy check (CRC), feedback packets and so on. This field may occupy hundreds of bytes or more of memory space. Also, a field 160 is provided which includes other information used by the ROHC protocol but not important for understanding this embodiment. Another field is a ROHC profile 130, which defines how and which headers are compressed. The protocols and algorithms for each ROHC profile are defined in a number of 3GPP RFCs and an example list for 4G LTE is shown in Table 1 below.

**Table 1**

| Profile list | Index | Profile Identifier | Usage Reference RFC |
|---|---|---|---|
| 1 | 0x0000 | No compression | RFC 4995 |
| 2 | 0x0001 | RTP/UDP/IP | RFC 3095, RFC 4815 |
| 3 | 0x0002 | UDP/IP | RFC 3095, RFC 4815 |
| 4 | 0x0003 | ESP/IP | RFC 3095, RFC 4815 |
| 5 | 0x0004 | IP | RFC 3843 |
| 6 | 0x0006 | TCP/IP | RFC 4996 |
| 7 | 0x0101 | RTP/UDP/IP | RFC 4995, RFC5225 |
| 8 | 0x0102 | UDP/IP | RFC 4995, RFC5225 |
| 9 | 0x0103 | ESP/IP | RFC 4995, RFC5225 |
| 10 | 0x0104 | IP | RFC 4995, RFC5225 |

For each bearer, a maximum number of CIDs is set (maxCID) which puts a cap on the maximum number of ROHC dataflows that a bearer can have. It also therefore puts a cap on the maximum number of ROHC contexts for that bearer, which is maxCID +1. Currently, the ROHC specification defines that CID may be within 0 to 16833, which gives a maximum number of ROHC contexts for each bearer of 16384.

A network node such as a base station 20 (or even a radio network controller (RNC)) may need to handle many hundreds or even thousands of user equipment 40, and each user equipment 40 may support a number of bearers and each bearer may have many ROHC dataflows. Therefore, the total number of ROHC contexts that need to be stored by the base station or the RNC may be very high.

Each network node has a ROHC controller 95, 105 that controls the ROHC entity set-up and release, and also the total ROHC context allocation in the memories 90, 100. Unless a network node has unlimited memory, when a network node is initialised a fixed size of memory is allocated for the total number of ROHC contexts that the network node can use. This is often referred to as the total ROHC context space.

Since the total ROHC context space is finite, a situation can occur where the total ROHC context space becomes full and so new bearers or dataflows will have no space left in the memory for storing its ROHC context, even if ROHC is activated. Also, for already-established bearers the number of ROHC context allocated within the total ROHC context space is not fixed. Hence, depending on the new dataflows appearing, a situation can arise where a new ROHC context is needed but there is no space left in the total ROHC context space for the new context and the new dataflow may not fit into any existing flows. In this case, the ROHC compressor will drop such packets.

The consequence of not being able to support new dataflows has a particular impact on low bit rate dataflows, notably Voice over IP (VoIP) related dataflows. Accordingly, in order to maximise VoIP capacity, it is desirable that sufficient ROHC context space exists in order to set up VoIP bearers, otherwise a VoIP application cannot use ROHC and this will drastically reduce the VoIP capacity.

Previously, when the ROHC controller detects that the total context space has been used up and a new dataflow is to be set up, then one of two options would be implemented. The first is to signal a ROHC entity set-up error where the ROHC controller indicates a ROHC set-up error so the network node knows to signal the call processing to indicate that ROHC should be disabled. Another option is to internally recycle ROHC contexts among existing bearers. For example, all dataflows may be put on an IP header-only profile (if activated) or on a non-compression profile (profile 0) so as to reduce ROHC context space usage and leave room for new dataflows. However, both of these approaches require additional signalling and additional ROHC processing, together with associated interface messages. Also, even when using either of these approaches no guarantee can be given that packets will not be dropped and that it will always be possible to support a VoIP dataflow.

### ROHC CONTEXT SPACE INITIALISATION AND ALLOCATION

Accordingly, as mentioned above, an approach is provided where part of the total ROHC context space is hard reserved for certain profiles, in this case for the non-compression and VoIP-related profiles. A dynamic threshold is constantly updated to reflect the current occupancy of the memory. That is to say, the dynamic threshold reflects how many ROHC contexts are currently stored within the memory. When the dynamic threshold indicates that only unused entries in the reserved space remain, a so-called "preservation state" is activated where either the new dataflow is combined with an existing dataflow (thereby avoiding the need to store a new ROHC context), or one or more new ROHC contexts are stored in entries reserved for that bearer in the reserved space but which have hitherto been unused. This ensures that whenever a new dataflow is received, no packets are dropped, as will be explained in more detail below.

As mentioned above, the controller 95, 105 is a per node controller which is responsible for ROHC initialisation and ROHC context space allocation within the network node memory 90, 100. The ROHC controller 95, 105 also controls each ROHC entity set-up, as well as how the ROHC context space is used when particular thresholds are reached. One ROHC entity is used for one radio bearer.

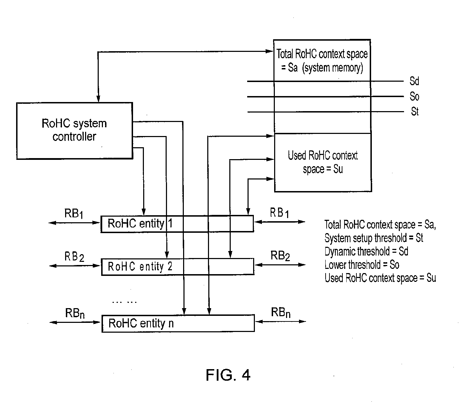

As shown schematically in Figures 3 and 4, when the ROHC controller 95, 105 is initialised for the network node, a total ROHC context space (whose size is Sa) is configured typically as a predetermined amount. For example, Sa may be set to 6,000 ROHC contexts. Following set-up, this total ROHC context space acts as a context pool and is shared by all radio bearers and their ROHC flows for that network node.

A system level threshold St is defined to hard reserve part of the total ROHC context space for use by potential VoIP dataflows (profiles 1 and 2) and for use by uncompressed dataflows (profile 0). The hard reserved part of the total ROHC context space comprises the entries between the system level threshold St and the total ROHC context space, (i.e. Sa - St). The size of the hard reserved part of the space can be calculated as: maximum active RBs + 2 x (maximum active VoIP RBs) for the whole network node, where the first component represents the minimum number of reserved entries for uncompressed dataflows (i.e. one uncompressed or profile 0 entry for each of the maximum number of anticipated radio bearers for that network node) and the second component represents the minimum number of reserved entries for VoIP dataflows (i.e. two entries for each of the maximum anticipated number of VoIP radio bearers, since each VoIP radio bearer requires two profiles, one for voice dataflows and one for control dataflows). This calculation may be derived from a traffic model, and a margin may be added. The remaining part of the total ROHC context space is unreserved and may be used by non-VoIP dataflows and dataflows which are not uncompressed.

For example, the traffic model may indicate that the maximum number of radio bearers per node is 600, of which the maximum number of VoIP radio bearers is 200. Accordingly, the reserved space (Sa - St) = 600 + 2 x 200 = 1000. Accordingly, the system threshold St would be set at 5,000.

### ROHC CONTEXT SPACE USAGE

When setting up the ROHC entity for a radio bearer, the controller 95, 105 sets a VoIP indication flag if the radio bearer is for VoIP use, otherwise this flag is not set. When the ROHC entity has been set up, the following procedures are applied for ROHC context space preservation and management.

One context and one channel ID is reserved for profile 0 (uncompressed dataflow). Accordingly, even when all the unreserved context space has run out and the ROHC radio bearer is still active, all new dataflows can be put on to profile 0 so that no packet drops occur.

When the controller 95, 105 indicates that the dataflow is for a VoIP radio bearer, the ROHC entity normally reserves CID=0 for VoIP UDP flow (profile 0x0001) to reduce the compressed VoIP header to a minimum size, so profile 0 will be assigned a non-zero CID. If the controller 95, 105 indicates that the dataflow is for a non-VoIP radio bearer, then profile 0 may be assigned to CID=0.

The controller 95, 105 maintains a dynamic threshold Sd which equals the system set-up threshold St plus the radio bearers already active that have used uncompressed profile (profile 0) and/or the two VoIP profiles (profiles 1 and 2) in the reserved space. Hence, the dynamic threshold Sd is the system threshold St + (total active RBs + 2 x (total active VoIP RBs) i.e. Sd = St + Su2. In other words, the dynamic threshold indicates the number of unused contexts within the reserved space.

For example, if the system threshold St is 5,000 contexts and the total ROHC context space Sa is 6,000 contexts, as indicated above, and if there are a total of 400 radio bearers active in which 100 are VoIP radio bearers, then the dynamic threshold Sd = 5,000 + (400 + 2 x 100) = 5,600. This means that 400 contexts are reserved and available for new radio bearers including new VoIP radio bearers, out of a reserved space of 1,000 where 600 of those 1,000 contexts have already been used.

After each new dataflow or bearer set-up, or dataflow or bearer release, the controller 95, 105 updates this dynamic threshold Sd.

The controller 95, 105 monitors the actual use of all ROHC contexts within the total ROHC context space (i.e. determines the occupancy of the memory and determines the total number of all contexts stored in both the reserved (Su2) and non-reserved (Su1) part of the total ROHC context space), which is the total number of used contexts Su, where Su = Su 1 + Su2.

If Su is less than Sd, then this means that space still exists outside the reserved part of the total ROHC context space and each ROHC entity is free to request a new context in a conventional manner and no restriction is placed on the allocation of contexts. The total number of contexts used will also decrease from time to time, due to radio bearers being released or the ceasing of some dataflows.

In this normal (non-preservation) state, when a new dataflow is detected it will be classified according to an activated profile and will require a new context from the shared context pool, subject to the cap of maximum contexts (which is maxCID + 1 per radio bearer per ROHC entity). If this per radio bearer cap is reached, the controller 95, 105 will try to recycle the CIDs first. If this is not possible, then the controller 95, 105 will be put all new dataflows onto profile 0. However, if the per radio bearer cap has not been reached then the controller 95, 105 will use a new context for the new dataflow.

If Su reaches Sd then this means that no space still exists outside the reserved part of the total ROHC context space and the ROHC controller 95, 105 enters a ROHC context preservation state. In this state, the reserved space will only be used by profile 0 for new radio bearers and by profiles 0x001 and 0x002 for VoIP radio bearers. This means that the following actions occur when requesting new ROHC context in the ROHC context preservation state.

When the controller 95, 105 sets up a new radio bearer and indicates it is a VoIP radio bearer, the ROHC entity may use up to three contexts (one for profile 0 and two for VoIP profiles) from the reserved space.

When the controller 95, 105 sets up a new radio bearer and indicates it is not a VoIP radio bearer, the ROHC entity can use one context (for profile 0) from the reserved space, no matter how big maxCID is when the ROHC entity is established. All dataflows on this radio bearer shall then use profile 0.

When the actual context usage Su has lowered (due to radio bearers being released or the ceasing of old dataflows) to be less than a lower threshold amount So below the dynamic threshold Sd, the ROHC context preservation state is exited and d normal state is resumed so that context allocation reverts back to normal operation. The use of the lower threshold So avoids threshold ping-pong by providing a hysteresis between Sd and So. That is to say that between Sd and So the preservation state is retained, whilst between So and Sd the normal state is retained.

It will be appreciated that CID reservation applies only to the compressors 40a, 20a and not to the decompressors 40b, 20b. The context space, including their thresholds, apply to both compression context and decompression context. These are normally managed as two separate spaces in the memory, one for the compressor and one for the decompressor. The preservation method used largely applies to the compressor which is free to choose CIDs to be used within the maxCID range. In the preservation state, the compressor can use fewer CIDs as described above. However, it will be appreciated that the decompressor has to follow the compressor CIDs. In order not to drop packets, enough decompressor context space needs to be provided and the compressor is unaware of any problems that may be encountered by the decompressor. Therefore, the decompressor is able to inform the compressor to reduce the number of CIDs which will typically be by using dynamic or on-the-fly signalling updates to inform the compressor to cap the CIDs it can use by signalling the current stage. For the decompression context space, the use of the various thresholds, the dynamic threshold update and the preservation or normal state, together with the use of hysteresis and other features, are the same as for the compression context space.

It should also be noted that the CID=0 reservation is for VoIP only. Since in the above decompression preservation it is possible to signal the compressor to use only one context, it will need to be CID=0 for profile 0.

### MULTI-STAGE ROHC CONTEXT SPACE USAGE

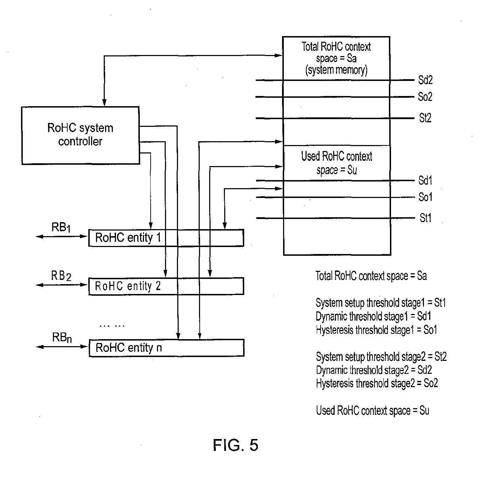

Figure 5 shows a progressive multi-threshold multi-stage approach as an extension to the single stage one threshold preservation described above. In this approach, multiple thresholds are used to indicate different stages of preservation, from the lowest to the highest preservation stages. In each stage, a reduced set of ROHC contexts can be used, up until the position where only one ROHC context (typically profile 0) can be used. The above mentioned one-threshold approach described above can be viewed therefore as belonging to this approach, sitting at the highest preservation stage.

In this example, there are two system thresholds, stage 1 at St1 and stage 2 at St2. There are also corresponding dynamic and hysteresis thresholds Sd1/Sd2 and So1/So2. As shown schematically in Figure 5, the Su above the threshold for stage 1 but below the threshold for stage 2 (Sd 1 <= Su < Sd2), so stage 1 preservation is entered, but not yet stage 2.

When in stage 1, a reduced number of ROHC contexts for data flows may be used (e.g., only two contexts, one for profile 0, and one for profile 0x0004 (IP header only)). Any new dataflow for the radio bearer will first be tried on the IP header only context, if it does not fit it will be put on profile 0.

If Su then enters stage 2 (Su >= Sd2), it can only use profile 0 for dataflows.

For VoIP dataflows, whatever stage it is in, the reserved three contexts may be used.

Accordingly, it can be seen that stage 1 is between the free use of the ROHC context space stage of the normal state, and the minimal use of the ROHC context space of stage 2. Hence, the space between St1 and St2 is the reserved extra space for more ROHC contexts on top of the bare minimum of stage 2. In the above example, this space (Sd2-Sd1) can be simply calculated from traffic model as [Maximum active RBs - Maximum active VoIP RBs] for the whole node. In other words, in the multi-stage case, the space between every two adjacent system thresholds is for the extra contexts allowed for that stage.

It will be appreciated that the memory space allocation illustrated in the embodiments is for illustrative purposes only and entries within the reserved and non-reserved space need not be physically or logically collocated. Instead, it would suffice that sufficient reserved and non-reserved entries were allocatable anywhere within the memory space.

It will be appreciated that the embodiments mentioned above help to eliminate a problem of ROHC context space depletion and ensures that VoIP applications can always use such that maximum system capacity can be reached. It can be seen that it is possible to ensure that the ROHC context space will never run out as long as the traffic model predictions are correct and sufficient margin has been provided. All ROHC-enabled radio bearers will have at least a profile 0 context to use, so packet drops will be eliminated. All VoIP applications, which are the biggest beneficiary of ROHC, will always have VoIP profile contexts to use. Hence, the system's VoIP capacity is maximised. This is crucial since VoIP capacity is a critical performance factor for most wireless networks which rely highly on ROHC to increase capacity. The hard reserved space is typically only one context per radio bearer and two extra contexts per VoIP radio bearer. Compared with the potential use of more than a dozen contexts per radio bearer, this is not a big overhead. The dynamic update of thresholds makes the context space use very efficient. In the normal state, each ROHC entity is free to use the total space without intervention; this reduces the controller processing significantly since the normal state will occur for most of the time. It will be appreciated that this solution may be utilised by any wireless node that applies encoding and, in particular, ROHC. For example, this approach may be used by base stations, handsets, dongles and the like.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling encoding of a data flow to be transmitted in accordance with at least one of a plurality of encoding schemes over a channel of a bearer established between a first network node and a second network node of a wireless communications system, said method comprising the steps of:
providing a memory having a plurality of entries, each entry being operable to store encoding context information relating to an encoding scheme being applied to a data flow being transmitted by said first network node;
providing a reserved area of said memory having a plurality of reserved entries operable to store encoding context information relating to a subset of said plurality of encoding schemes; and
on receipt of a request to support transmission of a new data flow, determining whether entries currently unused for storing encoding context information are only available in said reserved area and, if so, entering a preservation state where said new data flow is encoded with at least one of said subset of said plurality of encoding schemes.

2. The method of claim 1, wherein said step of determining comprises determining whether a number of total entries in said memory which are currently unused for storing encoding context information is less than or equal to a number of reserved entries in said reserved area which are currently unused for storing encoding context information and, if so, entering said preservation state where said new data flow is encoded with said at least one of said subset of said plurality of encoding schemes.

3. The method of claim 1 or 2, wherein when in said preservation state and said bearer is transmitting an existing data flow encoded with said at least one of said subset of said plurality of encoding schemes, said method comprises the step of incorporating said new data flow with said existing data flow being encoded with said at least one of said subset of said plurality of encoding schemes.

4. The method of any preceding claim, wherein when in said preservation state the method comprises the step of determining whether said new data flow is associated with voice data and, if not, encoding said new data flow with an uncompressed encoding scheme from said subset of said plurality of encoding schemes.

5. The method of any preceding claim, comprising the step of determining whether said new data flow is associated with voice data and, if so, encoding said new data flow with at least one header compression encoding scheme from said subset of said plurality of encoding schemes.

6. The method of any preceding claim, wherein when said bearer is not transmitting an existing data flow encoded with said at least one of said subset of said plurality of encoding schemes, said method comprises the step of storing encoding context information relating to each of said at least one encoding scheme being applied to said new data flow being transmitted by said first network node in a respective currently unused entry of said reserved area.

7. The method of any preceding claim, comprising the step of exiting said preservation when said total number of entries of said memory currently unused for storing encoding context information exceeds said number of reserved entries in said reserved area which are currently unused for storing encoding context information by a first predetermined amount.

8. The method of any preceding claim, comprising the step of setting said plurality of reserved entries in proportion to a number of bearers establishable between said first network node and said second network node.

9. The method of any preceding claim, comprising the step of setting at least three reserved entries for each bearer establishable between said first network node and said second network node.

10. The method of any preceding claim, comprising the step of determining whether said number of total entries in said memory which are currently unused for storing encoding context information is less than or equal to a predetermined threshold but is greater than said number of reserved entries in said reserved area which are currently unused for storing encoding context information and, if so, entering a reduced preservation state where said new data flow is encoded with at least one of an expanded subset of said plurality of encoding schemes.

11. The method of claim 10, comprising the step of exiting said reduced preservation state when said number of total entries in said memory which are currently unused for storing encoding context information exceeds said predetermined threshold by a second predetermined amount.

12. The method of any preceding claim, comprising the step of signalling between said second network node and said first network node when performing at least one of entering and exiting at least one of said preservation state and said reduced preservation state.

13. A computer program product operable, when executed on a computer, to perform the method steps of any preceding claim.

14. A network node operable to control encoding of a data flow to be transmitted in accordance with at least one of a plurality of encoding schemes over a channel of a bearer established with another network node of a wireless communications system, said network node comprising:
a memory having a plurality of entries, each entry being operable to store encoding context information relating to an encoding scheme being applied to a data flow being transmitted by said first network node, said memory having a reserved area having a plurality of reserved entries operable to store encoding context information relating to a subset of said plurality of encoding schemes; and
determining logic operable, on receipt of a request to support transmission of a new data flow, to determine whether entries currently unused for storing encoding context information are only available in said reserved area and, if so, to enter a preservation state where said new data flow is encoded with at least one of said subset of said plurality of encoding schemes.
